# EUROPÄISCHE PATENTSCHRIFT

(11) **EP 1 389 300 B1**
(45) Veröffentlichungstag und Bekanntmachung des Hinweises auf die Patenterteilung: **12.08.2015**
(21) Anmeldenummer: 02743009.9
(22) Anmeldetag: 14.05.2002
(51) Int. Cl.: G01F 1/84

(54) **MESSWANDLER VOM VIBRATIONSTYP**
TRANSDUCER OF THE VIBRATION TYPE
TRANSDUCTEUR DE VIBRATIONS

(30) Priorität: 23.05.2001 EP 01112546
(43) Veröffentlichungstag der Anmeldung: 18.02.2004
(73) Patentinhaber: Endress + Hauser Flowtec AG, 4153 Reinach BL 1 (CH)
(72) Erfinder: DRAHM, Wolfgang, 85435 Erding (DE); RIEDER, Alfred, 84034 Landshut (DE); BITTO, Ennio, CH-4147 Aesch (CH); LORENZ, Rainer, 79540 Lörrach (DE); SCHÜTZE, Christian, CH-4055 Basel (CH); WENGER, Alfred, CH-8413 Neftenbach (CH); FUCHS, Michael, 79427 Eschbach (DE); ANKLIN, Martin, CH-4147 Aesch (CH)
(74) Vertreter: Andres, Angelika Maria
(86) Internationale Anmeldenummer: PCT/EP2002/005276
(87) Internationale Veröffentlichungsnummer: WO 2002/099363

(56) Entgegenhaltungen:
- EP-A- 0 473 919
- EP-A- 0 598 287
- EP-A1- 0 985 913
- US-A- 5 979 246

## Beschreibung

Die Erfindung betrifft einen, insb. für eine Verwendung in einem Coriolis-Massedurchflußmesser geeigneten, Meßwandler vom Vibrationstyp.

Zur Ermittlung eines Massedurchflusses eines in einer Rohrleitung strömenden Fluids, insb. einer Flüssigkeit, werden oftmals solche Meßgeräte verwendet, die mittels eines Meßwandlers vom Vibrationstyp und einer daran angeschlossener Steuer- und Auswerteelektronik, im Fluid, Corioliskräfte bewirken und von diesen abgeleitet ein den Massedurchfluß repräsentierendes Meßsignal erzeugen.

Solche Meßwandler, insb. auch deren Verwendung in Coriolis-Massedurchflußmessern, sind bereits seit langem bekannt und im industriellen Einsatz. So ist z.B. in der US-A 55 49 009 Coriolis-Massedurchflußmesser mit jeweils einem Meßwandler vom Vibrationstyp beschrieben, welcher Meßwandler auf einen Massedurchfluß eines in einer Rohrleitung strömenden Fluids reagiert und welcher Meßwandler umfaßt:
- ein im Betrieb vibrierendes, gekrümmtes Meßrohr zum Führen des Fluids, welches Meßrohr über ein einlaßseitig mündendes Einlaßrohrstück und über ein auslaßseitig mündendes Auslaßrohrstück mit der Rohrleitung kommuniziert,
- ein zum Meßrohr im wesentlichen paralleler und gegenphasig oszillierender Gegenschwinger, der mit dem Meßrohr
   -- einlaßseitig mittels eines wenigstens ersten Kopplers und
   -- auslaßseitig mittels eines wenigstens zweiten Kopplers mechanisch verbunden ist,
- eine Erregeranordnung zum Antreiben des Meßrohrs und des Gegenschwingers bei einer Erregerfrequenz sowie
- eine Sensoranordnung zum Erfassen einlaßseitiger und auslaßseitiger Schwingungen des Meßrohrs,
- wobei eine Torsionssteifigkeit des Einlaßrohrstücks und eine Torsionssteifigkeit des Auslaßrohrstücks so aufeinander und auf ein von beiden getragenes, wenigstens von dem Meßrohr, dem Gegenschwinger, der erregeranordnung und der Sensoranordnung gebildetes Innenteil so abgestimmt sind, daß letzteres im wesentlichen drehweich aufgehängt ist.

Gekrümmte, z.B. U-, V-oder Ω-artig geformte, vibrierende Meßrohre können bekanntlich, angeregt zu Auslegerschwingungen gemäß einer ersten Eigenschwingungsform, im hindurchströmenden Fluid Corioliskräfte bewirken. Als erste Eigenschwingungsform des Meßrohrs wird bei derartigen Meßwandlern üblicherweise jene Eigenschwingungsform gewählt, bei denen das Meßrohr bei einer niedrigsten natürlichen Resonanzfrequenz um eine gedachte Längsachse des Meßwandlers pendelt.

Die so im Fluid erzeugten Corioliskräfte wiederum führen dazu, daß den angeregten, pendelartigen Auslegerschwingungen des sogenannten Nutzmodes Auslegerschwingungen gemäß einer wenigstens zweiten Eigenschwingungsform gleichfrequent überlagerf werden. Bei Meßwandlern der beschriebenen Art entsprechen diese durch Corioliskräfte erzwungenen Auslegerschwingungen, dem sogenannten Coriolismode, üblicherweise jener Eigenschwingungsform, bei-denen das Meßrohr auch Drehschwingungen um eine senkrecht zur Längsachse ausgerichtete gedachte Hochachse ausführt. Aufgrund der Überlagerung von Nutz-und Coriolismode weisen die mittels der Sensoranordnung einlaßseitig und auslaßseitig erfaßten Schwingungen des Meßrohrs eine auch vom Massedurchfluß abhängige, meßbare Phasendifferenz auf.

Häufig werden die Meßrohre derartiger, z.B. in Coriolis-Massedurchflußmessern eingesetzte, Meßwandler im Betrieb auf einer momentanen Resonanzfrequenz der ersten Eigenschwingungsform, insb. bei konstantgeregelter Schwingungsamplitude, angeregt. Da diese Resonanzfrequenz insb. auch von der momentanen Dichte des Fluids abhängig ist, kann z.B. mittels marktüblicher Coriolis-Massedurchflußmesser neben dem Massedurchfluß auch die Dichte von strömenden Fluiden gemessen werden.

Ein Vorteil einer gekrümmten Rohrform besteht z.B. darin, daß aufgrund thermisch bedingter Ausdehnungen, insb. auch bei der Verwendung von Meßrohren mit einem hohen Ausdehnungskoeffizienten, praktisch keine oder nur sehr gerinfügige mechanische Spannungen im Meßrohr selbst und/oder in der angeschlossenen Rohrleitung hervorgerufen werden. Ein weiterer Vorteil gekrümmter Meßrohre ist aber auch darin zu sehen, daß das Meßrohr relativ lang ausgeführt und somit eine hohe Empfindlichkeit des Meßwandlers auf den zu messenden Massedurchfluß bei einer relativ kurzen Einbaulänge und bei relativ niedriger Erregerenergie erzielt werden kann. Diese Umstände ermöglichen es, das Meßrohr auch aus Materialien mit einem hohen Ausdehnungskoeffizienten und/oder hohen Elastizitätsmodul, wie z.B. Edelstahl, herzustellen.

Im Vergleich dazu wird bei Meßwandlern vom Vibrations-Typ mit geradem Meßrohr, letzteres zur Vermeidung von axialen Spannungen und zur Erzielung einer ausreichenden Meßempfindlichkeit üblicherweise aus einem Material gefertigt, das zumindest einen niedrigeren Ausdehnungskoeffizienten und ggf. auch einen niedrigeren Elastizitätsmodul als Edelstahl aufweist. Daher werden für diesen Fall bevorzugt Meßrohre aus Titan oder Zirkonium verwendet, die jedoch aufgrund des höheren Materialpreises und des üblicherweise auch höheren Bearbeitungsaufwands weitaus teurer als die aus Edelstahl gefertigten sind.

Meßwandler nach der Art, wie sie in der US-A 55 49 009 vorgeschlagen sind, also mit einem, insb. einzigen, gekrümmten Meßrohr und mit einem, insb. zum Meßrohr parallelen, Gegenschwinger, haben sich vor allem bei solchen Anwendungen bewährt, bei denen das zu messende Fluid eine im wesentlich konstante oder nur in einem sehr geringen Maße veränderliche Dichte aufweist. Für diese Anwendungen ist es nämlich ohne weiteres möglich, mittels des im Betrieb zum Meßrohr gleichfrequent, jedoch gegenphasig oszillierenden Gegenschwingers solche Querkräfte nahezu vollständig zu neutralisieren und somit von der angeschlossenen Rohrleitung weitgehend fern zuhalten, die aufgrund wechselseitiger lateraler Bewegungen des pendelnden Meßrohrs im Meßwandler induziert worden sind.

Demgegenüber weist ein derartiger Meßwandler bei Anwendung für Fluide mit in einem weiten Bereich schwankender Dichte, insb. im Vergleich zu solchen Meßwandlern mit zwei parallelen Meßrohren, praktisch den gleichen Nachteil auf wie ein Meßwandler ohne Gegenschwinger.

Es hat sich nämlich gezeigt, daß für diesen Fall die vorgenannten, im Meßwandler intern erzeugten Kräfte mittels eines solchen Gegenschwingers auch nicht vollständig kompensiert werden können. Dies wiederum kann dazu führen, daß das oben erwähnte Innenteil, gesamtheitlich um die Längsachse des Meßwandlers pendelnd, auch lateral zu schwingen beginnt. Diese lateralen Schwingungen des Innenteils erzwingen dementsprechend auch eine zusätzliche elastische Verformung des Einlaß- und des Auslaßrohrstücks und können so folglich auch in der angeschfossenen Rohrleitung Biegeschwingungen bewirken.

Außerdem können aufgrund solcher lateraler Schwingungen auch im nicht von Fluid durchströmten Meßrohr dem Coriolismode sehr ähnliche und somit von diesem praktisch nicht unterscheidbare Auslegerschwingungen angestoßen werden, was dann wiederum das eigentlich den Massedurchfluß repräsentierende Meßsignal unbrauchbar machen würde.

Andererseits weist ein Meßwandler mit einem einzigen Meßrohr gegenüber einem mit zwei parallel durchströmten Meßrohren bekanntlich den großen Vorteil auf, daß dem Verbinden der Meßrohre mit der Rohrleitung dienende Verteilerstücke nicht erforderlich sind. Solche Verteilerstücke sind zum einen aufwendig zu fertigen und zum anderen stellen sie auch Strömungskörper mit einer hohen Neigung zur Ansatzbildung oder zur Verstopfung dar.

Eine Möglichkeit zur Reduzierung von dichteabhängigen Querkräften ist z.B. in der US-A 52 87 754 oder in der US-A 57 05 754 beschrieben. Bei dort gezeigten Meßwandlern werden die seitens des vibrierenden einzigen Meßrohrs erzeugten, eher mittel- oder hochfrequent oszillierenden Querkräfte mittels eines im Vergleich zum Meßrohr eher schweren Gegenschwingers und ggf. einer relativ weichen Ankopplung des Meßrohrs an die Rohrleitung, also praktisch mittels eines mechanischen Tiefpasses, von der Rohrleitung, fern gehalten. Ungünstigerweise steigt hierbei jedoch die zur Erzielung einer ausreichend robusten Dämpfung der Querkräfte erforderliche Masse des Gegenschwingers überproportional mit der Nennweite des Meßrohrs. Dies stellt einen großen Nachteil für solche Meßwandler dar, da eine Verwendung solch massiger Bauteile nämlich stets einen erhöhten Montageaufwand sowohl bei der Fertigung als auch beim Einbau des Meßgeräts in die Rohrleitung bedeutet. Außerdem läßt es sich hierbei nur noch sehr schwer sicherstellen, daß die mit zunehmender Masse ja auch immer niedriger werdende kleinste Eigenfrequenz des Meßwandlers nach wie vor weitab von den ebenfalls eher niederigen Eigenfrequenzen der angeschlossenen Rohrleitung liegt. Somit ist eine Verwendung eines derartigen Meßwandlers in industriell, insb. für Messungen von Flüssigkeiten, einsetzbaren Coriolis-Massedurchflußmeßgeräten eher auf relativ geringe Meßrohr-Nennweiten bis etwa 10 mm begrenzt.

Ferner sind beispielsweise in der EP-A 985 913 oder in der US-A 59 79 246 weitere Maßnahmen zur Reduzierung von dichteabhängigen Querkräften bei Meßwandlern mit einem einzigen geraden Meßrohr beschrieben.

Eine Aufgabe der Erfindung besteht daher darin, einen, insb. für einen Coriolis-Massedurchflußaufnehmer geeigneten, Meßwandler anzugeben, der, auch bei einer Verwendung nur eines einzigen, gekrümmten Meßrohrs, im Betrieb über einen weiten Fluiddichtebereich dynamisch gut ausbalanciert ist und der trotzdem von vergleichsweise geringer Masse ist.

Zur Lösung der Aufgabe besteht die Erfindung in einem Meßwandler vom Vibrationstyp für ein in einer Rohrleitung strömendes Fluid, welcher Meßwandler umfaßt:
- ein gekrümmtes, im Betrieb vibrierendes Meßrohr zum Führen des Fluids, welches Meßrohr über ein einlaßseitig mündendes Einlaßrohrstück und über ein auslaßseitig mündendes Auslaßrohrstück mit der Rohrleitung kommuniziert,
- einen zum Meßrohr im wesentlichen paralleler und im Betrieb gegenphasig oszillierenden Gegenschwinger, der mit dem Meßrohr
   -- einlaßseitig mittels eines ersten Kopplers und
   -- auslaßseitig mittels eines zweiten Kopplers mechanisch verbunden ist,
- eine Erregeranordnung zum Vibrierenlassen des Meßrohrs und des Gegenschwingers bei einer Erregerfrequenz,
- eine Sensoranordnung zum Erfassen einlaßseitiger und auslaßseitiger Schwingungen des Meßrohrs,
- wobei ein von wenigstens dem Meßrohr, dem Gegenschwinger, der Erregeranordnung und der Sensoranordnung gebildetes Innenteil, pendelnd um eine mit dem Einlaß- und dem Auslaßrohrstück im wesentlichen fluchtende, gedachte Längsachse des Meßwandlers,
   -- eine Drehung des ersten und des zweiten Kopplers um die Längsachse und
   -- zumindest abschnittsweise eine im wesentlichen torsionale, elastische Verformung des Einlaß- und des Auslaßrohrstücks erzwingt und
- wobei zum möglichst drehweichen Pendelnlassen des Innenteils,
   -- zumindest der erste Koppler, abgestimmt auf eine Torsionssteifigkeit des Einlaßrohrstücks, und
   -- zumindest der zweite Koppler, abgestimmt auf eine Torsionssteifigkeit des Auslaßrohrstücks, so bemessen sind, daß
      --- ein einlaßseitiger inhärenter Torsionseigenmode von erstem Koppler und Einlaßrohrstück eine Eigenfrequenz, die in etwa gleich der Erregerfrequenz oder kleiner als die Erregerfrequenz ist, und
      --- ein auslaßseitiger inhärenter Torsionseigenmode von zweitem Koppler und Auslaßrohrstück eine zur Eigenfrequenz des einlaßseitigen inhärenten Torsionseigenmode im wesentlichen gleiche Eigenfrequenz aufweisen.

Nach einer bevorzugten ersten Ausgestaltung der Erfindung verläuft der Gegenschwinger im wesentlichen parallel zum Meßrohr.

Nach einer bevorzugten zweiten Ausgestaltung der Erfindung weist der Gegenschwinger eine zum Meßrohr zumindest ähnliche Massenverteilung auf.

Nach einer bevorzugten dritten Ausgestaltung der Erfindung ist der Gegenschwinger rohrförmig.

Nach einer bevorzugten vierten Ausgestaltung der Erfindung verläuft der Gegenschwinger im wesentlichen koaxial zum Meßrohr.

Nach einer bevorzugten fünften Ausgestaltung der Erfindung ist der Gegenschwinger zum Meßrohr im wesentlich identisch geformt.

Nach einer bevorzugten sechsten Ausgestaltung der Erfindung sind zum Einstellen der Massenverteilung des Gegenschwingers an diesem Massenausgleichskörper angebracht.

Nach einer bevorzugten siebenten Ausgestaltung der Erfindung ist der Gegenschwinger schwerer als das Meßrohr.

Nach einer bevorzugten achten Ausgestaltung der Erfindung sind zum Abstimmen des einlaßseitigen Torsionseigenmodes am Einlaßrohrstück ein erster Drehmassenausgleichskörper und zum Abstimmen des auslaßseitigen Torsionseigenmodes am Auslaßrohrstück ein zweiter Drehmassenausgleichskörper starr fixiert.

Nach einer bevorzugten neunten Ausgestaltung der Erfindung umfaßt der Meßwandler einen zum Einlaßrohrstück im wesentlichen koaxialen ersten Torsionstilger und einen zum Auslaßrohrstück im wesentlichen koaxialen zweiten Torsionstilger.

Nach einer bevorzugten zehnten Ausgestaltung der Erfindung umfaßt der Meßwandler ein am Einlaßrohrstück und am Auslaßrohrstück fixiertes

Wandlergehäuse, das eine niedrigste Eigenfrequenz aufweist, die um mindestens 20% über der Erregerfrequenz liegt.

Nach einer bevorzugten Weiterbildung besteht die Erfindung in einem Coriolis-Massedurchflußmesser mit einem der vorgenannten Meßwandler.

Ein Grundgedanke der Erfindung ist es, solche, für den Coriolismode und somit auch für die Messung des Massedurchflusses eher unkritischen Torsionsschwingungen des in vorgenannter Weise aufgängten Innenteil, im wesentlichen hervorgerufen durch gleichphasige Pendelbewegungen von Meßrohr und Gegenschwinger, dazu zu benutzen,-die, für die Ausbildung des Coriolismodes und somit auch für die Messung des Massedurchflusses extrem schädlichen, lateralen Querkräfte zu neutralisieren. Das heißt, diese bislang eigentlich auch nicht erwünschten Torsionsschwingungen werden nicht einfach nur nicht unterdrückt, sondern vielmehr gezielt auf ihre mechanische Ankoppelung zur Rohrleitung hin abgestimmt so erzeugt, daß mittels dieser Torsionsschwingungen insgesamt eine Verminderung von Störeinflüssen auf den Meßwandler und somit eine Verbesserung von dessen Meßeigenschaften erreicht werden.

Erfindungsgemäß werden dazu ein vom einlaßseitigen Koppler und Einlaßrohrstück gebildeter einlaßseitiger Torsionsschwinger sowie ein vom auslaßseitigen Koppler und Auslaßrohrstück gebildeter auslaßseitiger Torsionsschwinger mechanisch so abgestimmt, daß beide Torsionsschwinger praktisch in Resonanz mit dem pendelnden Innenteil oszillieren. Dies dient dazu, das Innenteil möglichst frei von äußeren Gegenmomenten pendeln zu lassen, so daß dieses vom Einlaß- und Auslaßrohrstück praktisch vollständig entkoppelt ist. Aufgrund dieser Entkopplung ist ein Gesamtdrehimpuls des Innenteils praktisch null. In gleichem Maße wie der Gesamtdrehimpuls werden durch vorgenannte Entkopplung auch ein laterater Gesamtimpulse des Innenteils, also auch davon abgeleitete und nach außen übertragbare Querkräfte auf null reduziert.

Ein Vorteil der Erfindung besteht darin, daß der Meßwandler mit einem relativ geringen mechanischen Mehraufwand praktisch unhabhängig von betriebsbedingten Schwankungen einer inneren Gesamtmasse, insb. auch über einen weiten Fluiddichtebereich, sehr gut ausbalanciert ist.

Der erfindungsgemäße Meßwandler zeichnet sich des weiteren dadurch aus, daß Einlaß- und Auslaßrohrstück kurz und somit auch eine Einbaulänge des Meßwandlers insgesamt, bei einer im wesentlichen gleichbleibend hohen Güte der dynamischen Schwingungsentkopplung, erheblich verringert werden kann. Außerdem kann der Meßwandler trotz seiner kurzen Einbaulänge auch sehr leicht ausgeführt werden.

Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
Fig. 1 a zeigt einen Meßwandler vom Vibrations-Typ in einer perspektivischen Seitenansicht,
Fig. 1b zeigt den Meßwandler gemäß Fig. 1 a in einer axialen Vorderansicht,
Fig. 2 zeigt ein an einem Meßwandler gemäß den Fig. 1a, 1b ermittelbares erstes Meßdiagramm,
Fig. 3 ein an einem Meßwandler gemäß den Fig. 1a, 1b ermittelbares zweites Meßdiagramm und
Fig. 4 zeigt einen Torsionstilger für den Meßwandler.

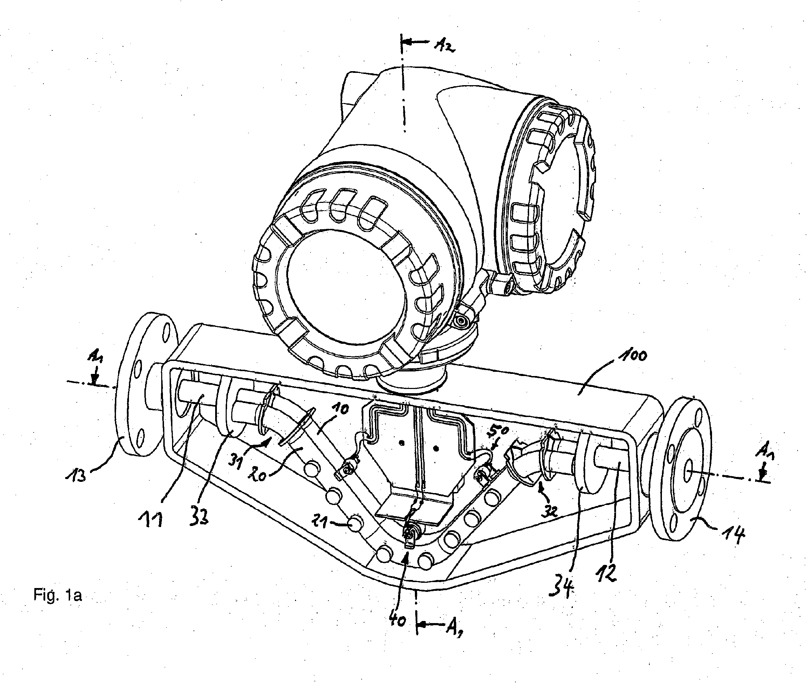

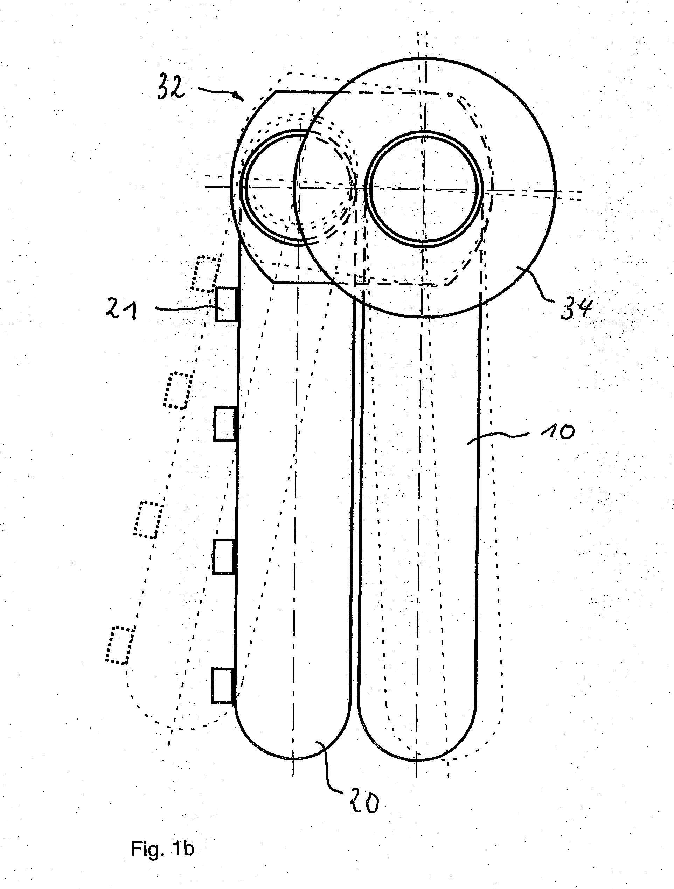

In den Fig. 1a, 1b ist ein Meßgerät für strömende Fluide mit einem Meßwandler vom Vibrationstyp schematisch dargestellt. Der Meßwandler dient dazu, in einem hindurchströmenden Fluid mechanische Reaktionskräfte, z.B. massendurchflußabhängige Coriolis-Kräfte, dichteabhängige Trägheitkräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so in der dem Fachmann bekannten Weise z.B. ein Massedurchfluß *m*, eine Dichte *ρ* und/oder eine Viskosität *η* des Fluids gemessen werden.

Zum Führen des zu messenden Fluids umfaßt Meßwandler ein, insb. einziges, gekrümmtes Meßrohr 10, das über ein einlaßseitig mündendes Einlaßrohrstück 11 und über ein auslaßseitig mündendes Auslaßrohrstück 12 an eine das Fluid zubzw. abführende, hier nicht dargestellte, Rohrleitung angeschlossen ist. Meßrohr 10, Einlaß- und Auslaßrohrstück 11, 12 sind, zueinander sowie zu einer gedachten Längsachse A₁ fluchtend ausgerichtet, in vorteilhafter Weise einstückig ausgeführt, so daß zu deren Herstellung z.B. ein einziges rohrförmiges Halbzeug dienen kann; falls erforderlich können das Meßrohr 10 sowie das Einlaß- und das Auslaßrohrstück 11, 12 aber auch mittels einzelner, nachträglich zusammengefügter, z.B. zusammengeschweißter, Halbzeuge hergestellt werden. Zur Herstellung des Meßrohrs 10 kann hierbei praktisch jedes der für solche Meßwandler üblichen Materialien, wie z.B. Stahl, Hastelloy, Titan, Zirkonium, Tantal etc., verwendet werden.

Für den bevorzugten Fall, daß der Meßwandler lösbaren mit der Rohrleitung zu montieren ist, ist dem Einlaßrohrstück 11 an einem Einlaßende ein erster Flansch 13 und dem Auslaßrohrstück 12 an einem Auslaßende ein zweiter Flansch 14 angeformt; falls erforderlich können Ein- und Auslaßrohrstück 11, 12 aber auch direkt mit der Rohrleitung, z.B. mittels Schweißen oder Hartlötung, verbunden werden.

Des weiteren ist am Einlaßende des Einlaßrohrstücks 11 und am Auslaßende des Auslaßrohrstück 12, wie auch in der Fig. 1a dargestellt, bevorzugt ein, insb. biege- und torsionssteifes, Wandlergehäuse 100, insb. starr, fixiert, das z.B. kastenförmig oder auch als ein Hohlzylinder ausgeführt sein kann. Das Wandlergehäuse 100 kann ferner auch dazu dienen, ein Elektronikgehäuse 200 des Meßgeräts zu haltern.

Wie in den Fig. 1a, 1b dargestellt, umfaßt der Meßwandler ferner einen Gegenschwinger 20 für das Meßrohr 10, der mittels eines einlaßseitgen ersten Kopplers 31 an einem Einlaßende des Meßrohrs 10 und und mittels eines auslaßseitigen, insb. zum Koppler 31 identisch geformten, zweiten Kopplers 32 an einem Auslaßende des Meßrohrs 10 schwingfähig fixiert ist. Als Koppler 31 können hierbei z.B. eine oder, wie auch in der Fig. 1a gezeigt, zwei Knotenplatten dienen, die in entsprechender Weise einlaßseitig jeweils an Meßrohr 10 und Gegenschwinger 20 befestigt sind; analog dazu kann auch der Koppler 32 mittels auslaßseitig jeweils an Meßrohr 10 und Gegenschwinger 20 befestigten Knotenplatten realisiert werden.

Der, bevorzugt ebenfalls rohrförmige, Gegenschwinger 20 ist vom Meßrohr 10 beabstandet und zu diesem im wesentlichen parallel ausgerichtet im Meßwandler angeordnet. Meßrohr 10 und Gegenschwinger 20 sind ferner bevorzugt so ausgeführt, daß sie bei einer möglichst identischen äußeren Raumform gleiche oder zumindest einander ähnliche, insb. zueinander proportionale, Massenverteilungen aufweisen. Es kann aber auch von Vorteil sein, den Gegenschwinger 20 nicht-identisch zum Meßrohr 10 zu formen; z.B. kann der Gegenschwinger 20 auch, falls erforderlich, koaxial zum Meßrohr 10 verlaufend im Meßwandler angeordnet sein.

Bevorzugt ist der Gegenschwinger 20 ferner so ausgeführt, daß er schwerer als das Meßrohr 10 ist.

Um ein möglichst einfach handhabbares Anpassen des Gegenschwingers 20 auf eine am tatsächlichen Meßrohr wirksame Massenverteilung zu ermöglichen, sind nach einer bevorzugten Ausgestaltung der Erfindung dem Gegenschwinger 20 als diskrete Zusatzmassen dienende Massenausgleichskörper 21, insb. lösbar, aufgesetzt. Die Massenausgleichskörper 21 können z.B. auf-entsprechende, von außen am Meßrohr 10 fixierte Stehbolzen aufgeschraubte Scheiben oder auf das Meßrohr aufgeschobene kurze Rohrstücke sein. Ferner kann eine entsprechende Massenverteilung über dem Gegenschwinger 20 z.B. auch durch Ausformen von Längs- oder Ringnuten realisiert werden. Eine für die jeweilige Anwendung geeignete Masseverteilung kann vorab z.B. mittels Finite-Elemente-Berechnungen und/oder mittels entsprechender Kalibriermessungen ohne weiteres ermittelt werden.

Im Betrieb des Meßwandlers wird das Meßrohr 10, wie bei derartigen Meßwandlern vom Vibrations-Typ üblich, zu Auslegerschwingungen bei einer Erregerfrequenz f_{exc}, so angeregt, daß es sich in diesem sogenannten Nutzmode, um die Längsachse A₁ des Meßwandlers pendelnd, im wesentlichen gemäß einer natürlichen ersten Eigenschwingungsform ausbiegt. Gleichzeitig wird auch der Gegenschwinger 20 zu Auslegerschwingungen angeregt, und zwar so, daß er, zumindest bei ruhendem Fluid, im wesentlichen gleichförmig, jedoch gegenphasig zum im Nutzmode schwingenden Meßrohr 10 oszilliert. Anders gesagt, Meßrohr 10 und Gegenschwinger 20 bewegen sich dann nach der Art von schwingenden Stimmgabelzinken.

Nach einer bevorzugten Ausgestaltung der Erfindung, ist die Erreger- oder auch Nutzmodefrequenz f_{exc} dabei so eingestellt, daß sie möglichst genau einer, insb. niedrigsten, natürlichen Eigenfrequenz des Meßrohrs 10 entspricht. Bei einer Verwendung eines aus Edelstahl gefertigten Meßrohrs mit einer Nennweite von 29 mm, einer Wandstärke von etwa 1,5 mm, einer gestreckten Länge von etwa 420 mm und einer gesehnten Länge von 305 mm gemessen vom Einlaß- zum Auslaßende ist, würde die niedrigste Resonanzfrequenz deselben beispielsweise bei einer Dichte von Null in etwa 490 Hz betragen.

Für den Fall, daß das Fluid in der Rohrleitung strömt und somit der Massedurchfluß m von Null verschieden ist, werden mittels des in oben beschriebener Weise vibrierenden Meßrohrs 10 im hindurchströmenden Fluid auch Corioliskräfte induziert. Diese wiederum wirken auf das Meßrohr 10 zurück und bewirken so eine zusätzliche, sensorisch erfaßbare Verformung deselben im wesentlichen gemäß einer natürlichen zweiten Eigenschwingungsform. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß m abhängig. Als zweite Eigenschwingungsform kann, wie bei deratigen Meßwandlern üblich, z.B. die Eigenschwingungsform des anti-symmetrischen Twistmodes, also jene, bei der das Meßrohr 10, wie bereits erwähnt, auch Drehschwingungen um eine senkrecht zur Längsachse A₁ ausgerichteten, gedachten Hochachse A₂ ausführt, die in einer einzigen Symmetrieebene des gezeigten Meßwandlers liegt.

Zum Erzeugen mechanischer Schwingungen des Meßrohrs 10 umfaßt der Meßwandler ferner eine, insb. elektrodynamische, Erregeranordnung 40. Diese dient dazu, eine, beispielsweise von einer im Elektronikgehäuse 200 untergebrachte nichtdargestellten Steuer-Elektronik des oben genannten Coriolis-Massedurchflußmessers eingespeiste, elektrische Erregerenergie *E_{exc}*, z.B. mit einem geregelten Strom und/oder einer geregelten Spannung, in eine auf das Meßrohr 10, z.B. pulsförmig oder harmonisch, einwirkende und dieses in der vorbeschriebenen Weise auslenkende Erregerkraft *F_{exc}* umzuwandeln. Für das Einstellen der Erregerenergie *E_{exc}* geeigneteSteuer- Steuer-Elektroniken z.B. in der US-A 47 77 833, der US-A 48 01 697, der 48 79 911 oder der US-A 50 09 109 gezeigt.

Die Erregerkraft *F_{exc}* kann, wie bei derartigen Meßwandlern üblich, bidirektional oder unidirektional ausgebildet sein und in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung 40 kann z.B. eine einfache Tauchspulenanordnung mit einer am Gegenschwinger 20 befestigten zylindrischen Erregerspule, die im Betrieb von einem entsprechenden Erregerstrom durchflossen ist, und einem in die Erregerspule zumindest teilweise eintauchenden dauermagnetischen Anker dienen, der von außen, insb. mittig, am Meßrohr 10 fixiert ist. Ferner kann als Erregeranordnung 40 z.B. auch-ein Elektromagnet dienen.

Zum Detektieren von Schwingungen des Meßrohr 10 umfaßt der Meßwandler außerdem eine Sensoranordnung 50. Als Sensoranordnung 50 kann praktisch jede der für derartige Meßwandler üblichen Sensoranordnungen verwendet werden, die Bewegungen des Meßrohrs 10, insb. einlaßseitig und auslaßseitig, erfaßt und in entsprechende Sensorsignale umwandelt. So kann die Sensoranordnung 50 z.B. in der dem Fachmann bekannten Weise, mittels eines einlaßßseitig am Meßrohr 10 angeordneten ersten Sensors und mittels eines auslaßseitigen am Meßrohr 10 angeordneten zweiten Sensors gebildet sein. Als Sensoren können z.B. die Schwingungen relativ messende, elektrodynamische Geschwindigkeitssensoren oder aber auch elektrodynamische Wegsensoren oder Beschleunigungssensoren verwendet werden. Anstelle elektrodynamischer Sensoranordnungen können ferner auch mittels resistiver oder piezo-elektrischer Dehnungsmeßstreifen messende oder opto-elektronische Sensoranordnungen zum Detektieren der Schwingungen des Meßrohrs 10 dienen.

Falls erforderlich, können ferner in der dem Fachmann bekannten Weise noch weitere für die Messung und/oder den Betrieb des Meßwandlers benötigte Sensoren, wie z.B. am Gegenschwinger 20 und/oder am Wandlergehäuse 100 angeordnete zusätzliche Schwingungssensoren, vgl. hierzu auch die US-A 57 36 653, oder z.B. auch am Meßrohr 10, am Gegenschwinger 20 und/oder am Wandlergehäuse 100 angeordente Temperatursensoren vorgesehen sein, vgl. hierzu auch die US-A 47 68 384 oder die WO-A 00/102816.

Wie den vorangegangen Erläuterungen ohne weiteres zu entnehmen, dient der Gegenschwinger 20 praktisch als ein Tragsystem für die Erregeranordnung 40 und die Sensoranordnung 50.

Gleichwohl dient der Gegenschwinger 20 aber auch dazu, den Meßwandler für genau einen vorherbestimmten, z.B. einen im Betrieb des Meßwandlers am häufigsten erwarteten oder auch einen besonders kritischen, Fluiddichtewert soweit dynamisch auszubalancieren, und zwar so, daß im vibrierenden Meßrohr 10 erzeugte, im wesentlichen senkrecht zu Längs- und Hochachse A₁, A₂ wirkende Querkräfte schon allein durch seitens des Gegenschwingers 20 erzeugte Gegenkräfte vollständig kompensiert werden, vgl. hierzu auch die US-A 55 49 009. Solche Querkräfte im Meßrohr 10, die bekanntlich bei einer Erregung deselben zu Auslegerschwingungen gemäß seiner ersten Eigenschwingungsform aufgrund von damit einhergehenden Massenbeschleunigungen im Meßrohr 10 erzeugt werden, würden beispielsweise für das oben erwähnte Edelstahlrohr und bei einer Schwingungsamplitude von etwa 0,03 mm im Bereich von 45 N liegen.

Für den Fall aber, daß, wie z.B. bei einem Meßwandler gemäß der US-A 55 49 009 ohne weiteres möglich, vorgenannte Querkräfte des Meßrohrs 10 nicht kompensiert werden, werden eine am Einlaßrohrstück 11 und am Auslaßrohrstück 12 aufgehängtes, vom Meßrohr 10, dem Gegenschwinger 20 ggf. mit den daran angebrachten Massenausgleichskörpern 21 sowie der Erreger- und der Sensoranordnung 40, 50 gebildetes Innenteil und in entsprechendem Maße auch die daran fixierten Koppler 31, 32 lateral aus einer zugewiesenen statischen Einbaulage ausgelenkt. Auf diese Weise können die Querkräfte via Einlaß- und Auslaßrohrstück 11, 12 zumindest zum Teil auch auf die angeschlossenen Rohrleitung wirken und diese somit gleichfalls vibrieren lassen. Des weiteren können derartige Querkräfte auch dazu führen, daß das Meßrohr 10, aufgrund einer aus schwingungstechnischer Sicht ungleichmäßigen Aufhängung des Innenteils oder auch des gesamten Meßwandlers, bedingt z.B. durch praktisch unvermeidliche Fertigungstoleranzen, zusätzlich zu Auslegerschwingungen gemäß der zweiten Eigenschwingungsform angeregt wird, die dann vom eigentlichen Coriolismode sensorisch nicht mehr unterscheidbar sind.

Wie bereits mehrfach erwähnt, kann das Meßrohr 10 allein mittels des Gegenschwingers 20, jedoch nur für einen einzigen Fluiddichtewert, bestenfalls aber nur für einen sehr schmalen Fluiddichtebereich dynamisch ausbalanciert werden.

Für den Fall, daß eine Masse des, insb. zum Meßrohr 10 identisch geformten, Gegenschwingers 20 kleiner als eine Masse des Fluid führenden Meßrohrs 10 ist, können nämlich das vibrierende Meßrohr 10 und der Gegenschwinger 20 zusätzlich gemeinsame Pendelbewegungen um die Längsachse A₁ ausführen, die, wie in Fig. 1b gezeigt, zumindest bei ruhendem Fluid zueinander und zu den Auslegerschwingungen des Gegenschwingers 20 im wesentlichen gleichphasig sind; für den Fall, daß die Masse des Fluid führenden Meßrohrs 10 kleiner als die Masse des Gegenschwingers 20 ist, können diese gemeinsamen oder auch globalen Pendelbewegungen gleichphasig zu den Auslegerschwingungen des Meßrohrs 10 ausgebildet sein. Anders gesagt, bedingt durch, insb. dichteabhängige, Unbalancen zwischen Meßrohr 10 und Gegenschwinger 20 kann das gesamte Innenteil im Betrieb Torsionsschwingungen um die Längsachse A₁ ausführen, die zu den Auslegerschwingungen des Meßrohrs 10 oder zu denen des Gegenschwingers 20 gleichphasig sind.

Aufgrund dieser Torsionsschwingungen des Innenteils erfahren auch die beiden praktisch starr mit dem Innenteil verbundenen Koppler 31, 32 eine entsprechende torsionale Verdrehung um die Längsachse A₁, d.h auch sie schwingen, und zwar, sowohl zum Innenteil als auch zueinander gleichphasig. In gleichem Maße wird zumindest abschnittsweise eine im wesentlichen torisionale, elastische Verformung des am Wandlergehäuse 100 und am Meßrohr 10 schwingfähig fixierten Einlaß- und des Auslaßrohrstücks 11, 12 erzwungen.

Es hat sich hierbei nun überraschenderweise gezeigt, daß lediglich durch ein geeignetes Abstimmen vorgenannter Torsionsschwinger, nämlich-des Einlaßrohrstücks 11 zusammen mit dem Koppler 31 und des Auslaßrohrstück 12 zusammen mit dem Koppler 32, der Meßwandler praktisch unabhängig von der Dichte *ρ* des Fluids dynamisch ausbalanciert und so eine Empfindlichkeit auf intern erzeugte Querkräfte erheblich verringert werden kann.

Erfindungsgemäß sind dazu ein, hier mittels wenigstens des Kopplers mittels wenigstens des Kopplers 31 eingestelltes, einlaßseitiges Massenträgheitsmoment um die Längsachse A₁ und eine Torsionssteifigkeit des Einlaßrohrstücks 11 so aufeinander abgestimmt, daß ein einlaßseitiger inhärenter, also praktisch nur zu berechnender, Torsionseigenmode von Koppler 31 und Einlaßrohrstück 11 um die Längsachse A₁ eine zur Erregerfrequenz f_{exc} im wesentlichen gleiche oder aber auch eine kleinere Eigenfrequenz f₁ aufweist. Des weiteren sind ein auslaßseitiges Massenträgheitsmoment um die Längsachse A₁, hier mittels wenigstens des Kopplers 32, und eine Torsionssteifigkeit des Auslaßrohrstücks 12 so aufeinander abgestimmt, daß ein auslaßseitiger inhärenter Torsionseigenmode von Koppler 32 und Auslaßrohrstück 12 um die Längsachse A₁ eine zur Eigenfrequenz f₁ im wesentlichen gleiche Eigenfrequenz f₂ aufweisen. Bei dem hier gezeigten Meßwandler sind außerdem auch jene zwischen den beiden Knotenplatten des Kopplers 31 verlaufenden, praktisch nicht vibrierenden Rohrsegmente bei der Dimensionierung des Massenträgheitsmoments für die Abstimmung des einlaßseitigen Torsionseigenmodes zu berücksichtigen; in entsprechender Weise sind auch die zwischen den beiden Knotenplatten des Kopplers 32 verlaufenden Rohrsegmente bei der Abstimmung des auslaßseitigen Torsionseigenmodes dem Massenträgheitsmoment des Kopplers 32 zuzuschlagen.

Aufgrund einer Abstimmung von Nutzmode und Torsionseigenmode in der beschriebenen Weise wird erreicht, daß das Innenteil, das im Betrieb gleichfrequent mit dem bei der Erregerfrequenz f_{exc} schwingenden Meßrohr 10 pendelt, praktisch genau den einlaßseitigen und den auslaßseitigen Torsionseigenmode anstößt. Für diesen Fall, setzen die beiden, auf ihrer jeweiligen Eigenfrequenz f₁ bzw. f₂ und zwangsläufig auch gleichphasig mit dem Innenteil schwingenden Torsionsschwinger dessen Torsionsschwingungen keine oder nur noch sehr geringe Gegenmomente entgegen. Somit ist das Innenteil im Betrieb so drehweich gelagert, daß es praktisch als vom Einlaß- und vom Auslaßrohrstück 11, 12 völlig entkoppelt angesehen werden kann.

Wegen der Tatsache, daß das Innenteil trotz einer praktisch vollständigen Entkopplung im Betrieb um die Längsachse A₁ pendelt und nicht rotiert, kann folglich auch kein Gesamtdrehimpuls des Innenteils existieren. Dadurch aber sind auch ein vom Gesamtdrehimpuls, insb. bei ähnlichen Massenverteilungen im Meßrohr 10 und im Gegenschwinger 20, nahezu direkt abhängiger lateraler Gesamtimpuls und somit auch von diesem abgeleitete, laterale Querkräfte, die vom Innenteil nach außen übertragen werden können, ebenfalls gleich null. Anders gesagt, beim erfindungsgemäßen Meßwandler führen dichteabhängige Unbalancen fast ausschließlich zur Änderung einer momentanen Amplitude der Torsionsschwingungen des Innenteils jedoch zu keinen oder nur zu vernachlässigbar geringen lateralen Verschiebungen deselben aus der ihm zugewiesenen Einbaulage.

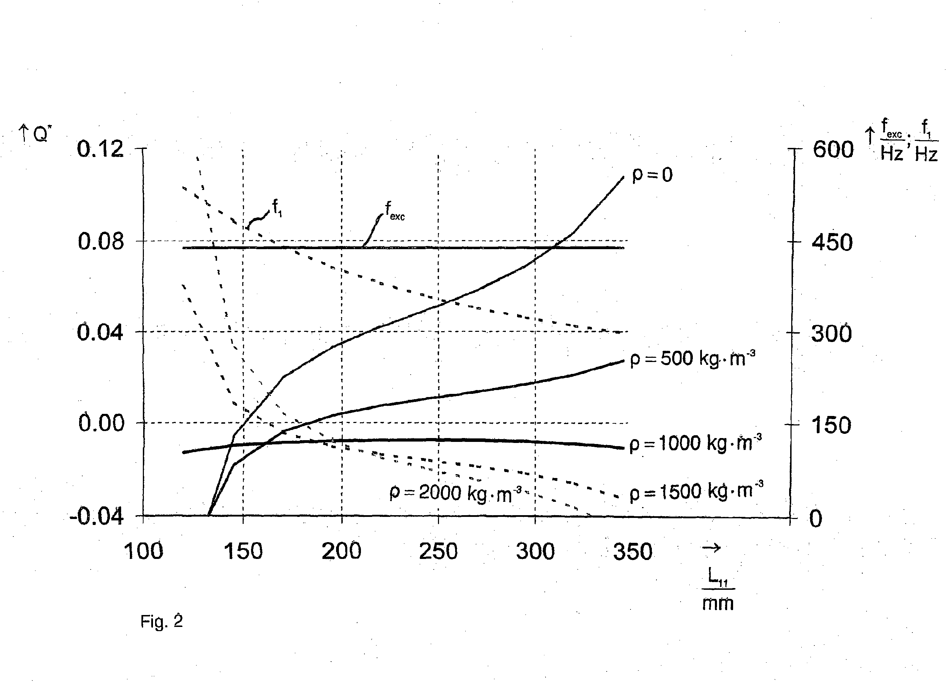

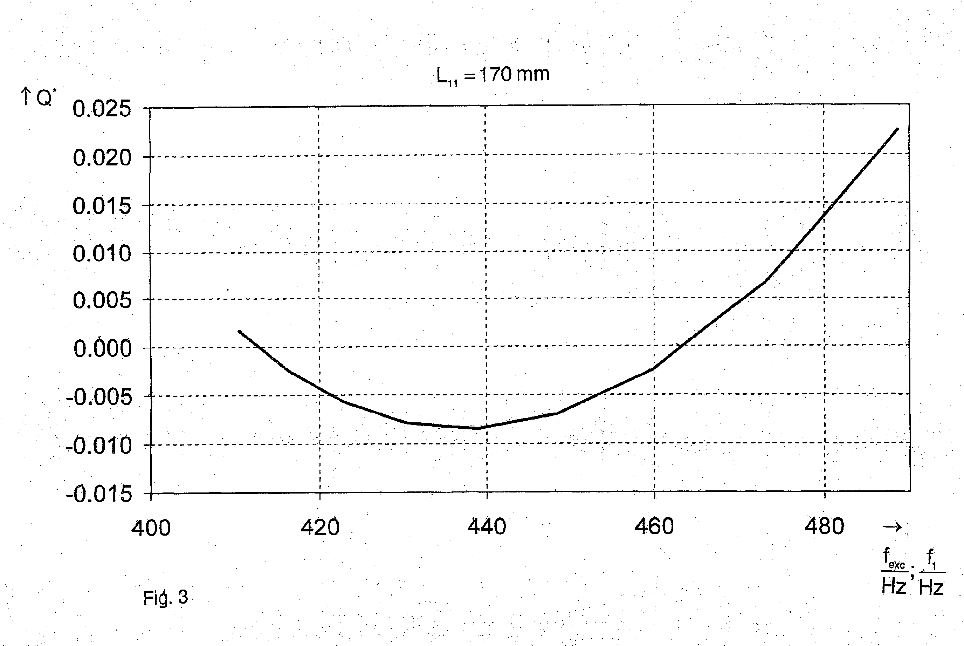

Untersuchungen an Meßwandlern mit oben beschriebenem Edelstahl-Meßrohr haben z.B. gezeigt, daß trotz einer Änderung der Erregerfrequenz f_{exc} über eine für derartige Meßwandler üblichen Spannweite von etwa 100 Hz, dies entspricht in etwa einem Fluiddichtebereich zwischen 0 und 2000 kg · m⁻³, eine auf das Innenteil wirkende maximale Querkraft Q^{*}, normiert auf eine in den Kopplern 31, 32 durch die zueinander gegenphasigen Bewegungen von Meßrohr 10 und Gegenschwinger 20 hervorgerufene, maximale Spannkraft, deutlich unter 5%, also bei etwa 2 N gehalten werden kann, siehe hierzu auch Fig. 2 und 3.

Für diesen vorgenannten Fall müßte z.B. bei einer Länge L₁₁ des Einlaßrohrstücks 11 von etwa 170 mm jenes einlaßseitig eingestellte Massenträgheitsmoment in etwa 1,5 · 10⁻³ kg · m² betragen, um den zugehörigen Torsionseigenmode in der vorgenannten Weise auf die Erregerfrequenz f_{exc} einzustellen, vgl. hierzu auch Fig. 2. Die am konkreten Meßwandler zum optimalen Abstimmen des einlaßseitigen und des auslaßseitigen Torsionseigenmode auf den Nutzmode dann einzustellenden Parameter, also entsprechende Massenverteilungen, Massenträgheitsmomente, Torsionssteifigkeiten und daraus abgeleitete geometrische Abmessungen von Meßrohr 10, Gegenschwinger 20, Einlaß- und Auslaßrohrstück 11, 12 sowie der beiden Koppler 31, 32 etc., können z.B. in der dem Fachmann an und für sich bekannten Weise mittels Finiter-Elemente- oder anderer computergestützten Simulationsberechnungen in Verbindung mit entsprechenden Kalibriermessungen ermittelt werden.

Zur möglichst genauen Abstimmung des einlaßseitigen Torsionseigenmodes, insb. auch bei vorgegebener Einbaulänge des Meßwandlers, sind nach einer bevorzugten Ausgestaltung der Erfindung am Einlaßrohrstück 11, insb. in der Nähe des Kopplers 31, wenigstens ein erster Drehmassenausgleichskörper 33 und in entsprechender Weise zur Abstimmung des auslaßseitigen Torsionseigenmodes am Auslaßrohrstück 12, insb. in der Nähe des Kopplers 32, wenigstens ein zusätzlicher zweiter Drehmassenausgleichskörper 34 starr fixiert. Die, insb. zueinander identisch geformten, Drehmassenausgleichskörper 33, 34 sind bevorzugt scheibenförmig ausgeführt und können sowohl, wie z.B. in der Fig. 1a bzw. 1b gezeigt, konzentrisch, also mit einem jeweiligen Massenschwerpunkt auf der Längsachse A₁ liegend, als auch exzentrisch am Einlaß- bzw. am Auslaßrohrstück 11, 12 angebracht sein. Für den gezeigten Meßwandler kann obengenanntes Massenträgheitsmoment von 1,5 · 10⁻³ kg · m² z.B. so in sehr einfacher Weise fast ausschließlich mittels jeweils einer als Drehmassenausgleichskörper 33 bzw. 34 dienenden Kreisringscheibe aus Edelstahl mit einem Scheibendurchmesser von etwa 100 mm und einer Scheibendicke von etwa 15 mm realisiert werden.

Es hat sich ferner gezeigt, daß zur sicheren Vermeidung zueinander gegenphasiger Torsionsschwingungen von einlaßseitigem und auslaßseitigem Torsionsschwinger eine zusätzliche torsionssteife Verbindung der beiden Koppler 31, 32 oder der beiden Drehmassenausgleichskörper 33, 34 zu einem inneren Tragrahmen von Vorteil sein kann. Außerdem ist festgestellt worden, daß die Erregerfrequenz f_{exc} vorzugsweise auf höchstens 85% einer niedrigsten Eigenfrequenz Wandlergehäuses 100 eingestellt sein sollte, das in obigem Sinne praktisch als äußerer Tragrahmen wirkt.

Nach einer weiteren bevorzugten Ausgestaltung der Erfindung umfaßt der Meßwandler ferner einen einlaßseitigen ersten Torsionstilger 60 sowie einen, zu diesem im wesentlichen identisch geformten, außlaßseitigen zweiten Torsionstilger 70. Der Torsionstilger 60 dient insb. dazu vom pendelnden Innenteil hervorgerufene, via Einlaßrohrstück 11 auf die angeschlossene Rohrleitung und/oder das am Einlaßende fixierte Wandlergehäuse 100 übertragene Torsionsmomente zu unterdrücken.

Dazu ist der Torsionstilger 60 ist am Einlaßende des Einlaßrohrstücks 11 oder zumindest in der Nähe des Einlaßendes, z.B. auch direkt am Wandlergehäuse 100, zum Einlaßrohrstück 11 fixiert; in dazu analoger Weise ist der, ebefalls dem Vermeiden von Torsionsmomenten auf der angeschlossene Rohrleitung und/oder dem Wandlergehäuse 100 dienende, zweite Torsionstilger am Auslaßende des Auslaßrohrstücks 12 angebracht.

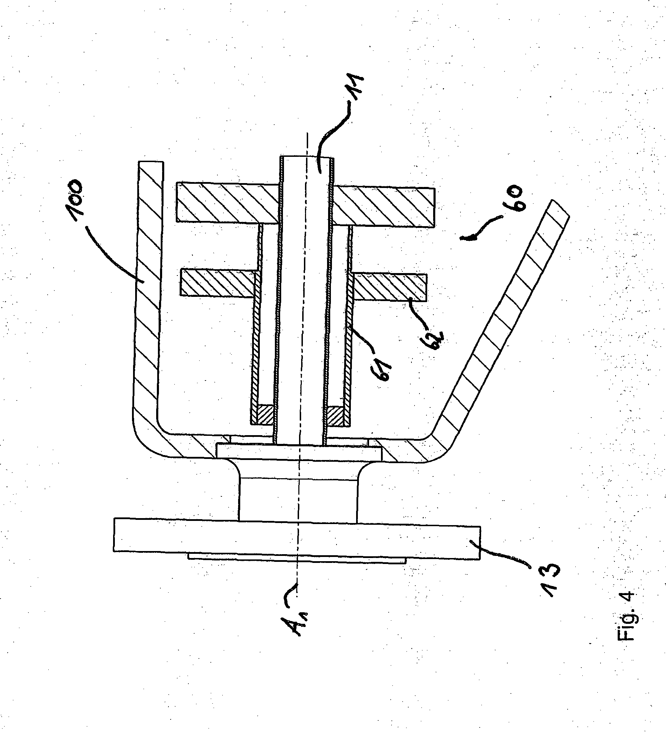

Der Torsionstilger 60 umfaßt, wie in Fig. 4 dargstellt, eine, bevorzugt rohrförmige und zum Einlaßrohrstück 11 im wesentlichen koaxial angeordnete, Torsionsfeder 61, die drehschwingfähig, also gegen das Einlaßrohrstück 11 zumindest abschnittsweise verdrehbar am Einlaßende fixiert ist. Des weiteren umfaßt der Torsionstilger 60 einen entfernt vom Einlaßende des Einlaßrohrstücks 11 an der Torsionsfeder angebrachten, bevorzugt scheibenförmigen, Drehmassenkörper 62. Torsionsfeder 61 und Drehmassenkörper 62 sind nunmehr so aufeiander abgestimmt, daß der Torsionstilger 60, im Betrieb durch das sich verdrehende Einlaßrohrstück 11 und/oder durch das sich gleichfalls leicht verformende Wandlergehäuse 100 zu Torsionsschwingungen um die Längsachse A₁ angeregt, außerphasig, insb. gegenphasig, zum oben erwähnten einlaßseitigen Torsionsschwinger, bestehend aus Koppler 31 und Einlaßrohrstück 11, schwingt. Zur Unterstützung der Anregung des Torsionstilgers 60 kann die Torsionsfeder 61 in vorteilhafter Weise z.B. auch bis hin zum ggf. vorhandenen Drehmassenausgleichskörper 33 oder bis zum Koppler 31 verlängert und an einem der beiden fixiert werden. Dies dient dann auch dazu, allfällige laterale Biegeschwingungen des Torsionstilgers 60 zu unterdrücken.

Der erfindungsgemäße Meßwandler ist aufgrund seiner guten dynamischen Ausbalancierung auch bei schwankender Dichte *ρ* des hindurchströmenden Fluids besonders für eine Verwendung in einem Coriolis-Massedurchflußmesser, einem Coriolis-Massedurchfluß-/Dichtemesser oder in einem Coriolis-Massedurchfluß-/Dichte-/Viskositätsmesser geeignet.

## Patentansprüche

1. Meßwandler vom Vibrationstyp für ein in einer Rohrleitung strömendes Fluid, welcher Meßwandler umfaßt:
- ein gekrümmtes, im Betrieb vibrierendes Meßrohr (10) zum Führen des Fluids, welches Meßrohr (10) über ein einlaßseitig mündendes Einlaßrohrstück (11) und über ein auslaßseitig mündendes Auslaßrohrstück (12) mit der Rohrleitung kommuniziert,
- einen zum Meßrohr (10) im Betrieb gegenphasig oszillierenden Gegenschwinger (20), der mit dem Meßrohr (10)
-- einlaßseitig mittels eines ersten Kopplers (31) und
-- auslaßseitig mittels eines zweiten Kopplers (32) mechanisch verbunden ist,
- eine Erregeranordnung (40) zum Vibrierenlassen des Meßrohrs (10) und des Gegenschwingers (20) bei einer Erregerfrequenz f_{exc},
- eine Sensoranordnung (50) zum Erfassen einlaßseitiger und auslaßseitiger Schwingungen des Meßrohrs (10),
- wobei ein von wenigstens dem Meßrohr (10), dem Gegenschwinger (20), der Erregeranordnung (40) und der Sensoranordnung (50) gebildetes Innenteil, pendelnd um eine mit dem Einlaß- und dem Auslaßrohrstück (11, 12) im wesentlichen fluchtende, gedachte Längsachse (A₁) des Meßwandlers,
-- eine Drehung des ersten und des zweiten Kopplers (31, 32) um die Längsachse (A₁) und
-- zumindest abschnittsweise eine im wesentlichen torsionale, elastische Verformung des Einlaß- und des Auslaßrohrstücks (11, 12) erzwingt,
**dadurch gekennzeichnet, daß** zum möglichst drehweichen Pendelnlassen des Innenteils, zumindest der erste Koppler (31), abgestimmt auf eine Torsionssteifigkeit des Einlaßrohrstücks (11), und zumindest der zweite Koppler (32), abgestimmt auf eine Torsionssteifigkeit des Auslaßrohrstücks (12), so bemessen sind, daß
- ein einlaßseitiger inhärenter Torsionseigenmode von erstem Koppler (31) und Einlaßrohrstück (11) eine zur Erregerfrequenz f_{exc} in etwa gleiche Eigenfrequenz f₁ und
- ein auslaßseitiger inhärenter Torsionseigenmode von zweitem Koppler (32) und Auslaßrohrstück (12) eine zur Eigenfrequenz f₁ im wesentlichen gleiche Eigenfrequenz f₂ aufweisen.

2. Meßwandler vom Vibrationstyp für ein in einer Rohrleitung strömendes Fluid, welcher Meßwandler umfaßt:
- ein gekrümmtes, im Betrieb vibrierendes Meßrohr (10) zum Führen des Fluids, welches Meßrohr (10) über ein einlaßseitig mündendes Einlaßrohrstück (11) und über ein auslaßseitig mündendes Auslaßrohrstück (12) mit der Rohrleitung kommuniziert,
- einen zum Meßrohr (10) im Betrieb gegenphasig oszillierenden Gegenschwinger (20), der mit dem Meßrohr (10)
-- einlaßseitig mittels eines ersten Kopplers (31) und
-- auslaßseitig mittels eines zweiten Kopplers (32) mechanisch verbunden ist,
- eine Erregeranordnung (40) zum Vibrierenlassen des Meßrohrs (10) und des Gegenschwingers (20) bei einer Erregerfrequenz f_{exc},
- eine Sensoranordnung (50) zum Erfassen einlaßseitiger und auslaßseitiger Schwingungen des Meßrohrs (10),
- wobei ein von wenigstens dem Meßrohr (10), dem Gegenschwinger (20), der Erregeranordnung (40) und der Sensoranordnung (50) gebildetes Innenteil, pendelnd um eine mit dem Einlaß- und dem Auslaßrohrstück (11, 12) im wesentlichen fluchtende, gedachte Längsachse (A₁) des Meßwandlers,
-- eine Drehung des ersten und des zweiten Kopplers (31, 32) um die Längsachse (A₁) und
-- zumindest abschnittsweise eine im wesentlichen torsionale, elastische Verformung des Einlaß- und des Auslaßrohrstücks (11, 12) erzwingt,
**dadurch gekennzeichnet, daß** zum möglichst drehweichen Pendelnlassen des Innenteils, zumindest der erste Koppler (31), abgestimmt auf eine Torsionssteifigkeit des Einlaßrohrstücks (11), und zumindest der zweite Koppler (32), abgestimmt auf eine Torsionssteifigkeit des Auslaßrohrstücks (12), so bemessen sind, daß
- ein einlaßseitiger inhärenter Torsionseigenmode von erstem Koppler (31) und Einlaßrohrstück (11) eine Eigenfrequenz f₁, die kleiner als die Erregerfrequenz f_{exc} ist, und
- ein auslaßseitiger inhärenter Torsionseigenmode von zweitem Koppler (32) und Auslaßrohrstück (12) eine zur Eigenfrequenz f₁ im wesentlichen gleiche Eigenfrequenz f₂ aufweisen.

3. Meßwandler nach Anspruch 1 oder 2, **dadurch gekennzeichnet, daß** der Gegenschwinger (20) zum Meßrohr (10) im wesentlichen parallel verläuft.

4. Meßwandler nach einem der vorherigen Ansprüche, **dadurch gekennzeichnet, daß** der Gegenschwinger (20) eine zum Meßrohr (10) zumindest ähnliche Massenverteilung aufweist.

5. Meßwandler nach einem der vorherigen Ansprüche, **dadurch gekennzeichnet, daß** der Gegenschwinger (20) rohrförmig ist.

6. Meßwandler nach Anspruch 5, **dadurch gekennzeichnet, daß** der Gegenschwinger (20) im wesentlichen koaxial zum Meßrohr (10) verläuft.

7. Meßwandler nach Anspruch 5, **dadurch gekennzeichnet, daß** der Gegenschwinger (20) zum Meßrohr (10) im wesentlich identisch geformt ist.

8. Meßwandler nach einem der Ansprüche 4 bis 7, **dadurch gekennzeichnet, daß** zum Einstellen der Massenverteilung des Gegenschwingers (20) an diesem Massenausgleichskörper (21) angebracht sind.

9. Meßwandler nach einem der Ansprüche 4 bis 8, **dadurch gekennzeichnet, daß** der Gegenschwinger (20) schwerer als das Meßrohr (10) ist.

10. Meßwandler nach einem der vorherigen Ansprüche, **dadurch gekennzeichnet, daß** zum Abstimmen des einlaßseitigen Torsionseigenmodes am Einlaßrohrstück (11) ein erster Drehmasseriausgleichskörper (33) und zum Abstimmen des auslaßseitigen Torsionseigenmodes am Auslaßrohrstück (12) ein zweiter Drehmassenausgleichskörper (34) starr fixiert sind.

11. Meßwandler nach einem der vorherigen Ansprüche, weiters umfassend: einen zum Einlaßrohrstück (11) im wesentlichen koaxialen ersten Torsionstilger (60) und einen zum Auslaßrohrstück (12) im wesentlichen koaxialen zweiten Torsionstilger (70).

12. Meßwandler nach einem der vorherigen Ansprüche, weiters umfassend: ein am Einlaßrohrstück (11) und am Auslaßrohrstück (12) fixiertes Wandlergehäuse (100), das eine niedrigste Eigenfrequenz aufweist, die um mindestens 20% über der Erregerfrequenz f_{exc} liegt.

13. Coriolis-Massedurchflußmesser mit einem Meßwandler nach einem der Ansprüche 1 bis 12.

## Claims

1. Vibronic-type transducer for a fluid flowing through a pipe, said transducer comprising:
- a curved measuring tube (10), which vibrates during operation, and which is designed to convey the fluid, said measuring tube communicating with the pipe via an inlet pipe element (11) which opens into the inlet side and an outlet pipe element (12) which opens into the outlet side,
- a counter-oscillator (20) which oscillates during operation in an opposite phase in relation to the measuring tube (10), said counter-oscillator (20) being mechanically connected to the measuring tube (10)
-- by means of a first coupler (31) on the inlet side, and
-- by means of a second coupler (32) on the outlet side
- an exciter arrangement (40) designed to make the measuring tube (10) and the counter-oscillator (20) vibrate at an exciter frequency f_{exc},
- a sensor arrangement (50) designed to sense vibrations of the measuring tube (10) at the inlet and outlet side,
- wherein an inner part, which is formed at least by the measuring tube (10), the counter-oscillator (20), the exciter arrangement (40) and the sensor arrangement (50) provokes in a pendular manner around an imaginary longitudinal axis (A₁) of the transducer that is essentially aligned with the inlet and outlet pipe elements (11, 12),
-- a rotation of the first and second coupler (31, 32) around the longitudinal axis (A₁) and
-- at least partially an elastic deformation of the inlet and outlet pipe element (11, 12), said elastic deformation being essentially torsional
**characterized in that** in order to obtain as soft a rotation as possible in the pendular movement of the inner part at least the first coupler (31) is sized in a manner that is adapted to the torsional rigidity of the inlet pipe element (11), and at least the second coupler (32) is sized in a manner that is adapted to the torsional rigidity of the outlet pipe element (12), such that
- an inherent, inlet-side natural torsional mode of the first coupler (31) and inlet pipe element (11) has a natural frequency f₁ approximately equal to the excitation frequency f_{exc}, and
- an inherent, outlet-side natural torsional mode of the second coupler (32) and outlet pipe element (12) has a natural frequency f₂ that is essentially equal to the natural frequency f₁.

2. Vibronic-type transducer for a fluid flowing through a pipe, said transducer comprising:
- a curved measuring tube (10), which vibrates during operation, and which is designed to convey the fluid, said measuring tube communicating with the pipe via an inlet pipe element (11) which opens into the inlet side and an outlet pipe element (12) which opens into the outlet side,
- a counter-oscillator (20) which oscillates during operation in an opposite phase in relation to the measuring tube (10), said counter-oscillator (20) being mechanically connected to the measuring tube (10)
-- by means of a first coupler (31) on the inlet side, and
-- by means of a second coupler (32) on the outlet side
- an exciter arrangement (40) designed to make the measuring tube (10) and the counter-oscillator (20) vibrate at an exciter frequency f_{exc},
- a sensor arrangement (50) designed to sense vibrations of the measuring tube (10) at the inlet and outlet side,
- wherein an inner part, which is formed at least by the measuring tube (10), the counter-oscillator (20), the exciter arrangement (40) and the sensor arrangement (50) provokes in a pendular manner around an imaginary longitudinal axis (A₁) of the transducer that is essentially aligned with the inlet and outlet pipe elements (11, 12),
-- a rotation of the first and second coupler (31, 32) around the longitudinal axis (A₁) and
-- at least partially an elastic deformation of the inlet and outlet pipe element (11, 12), said elastic deformation being essentially torsional
**characterized in that** in order to obtain as soft a rotation as possible in the pendular movement of the inner part at least the first coupler (31) is sized in a manner that is adapted to the torsional rigidity of the inlet pipe element (11), and at least the second coupler (32) is sized in a manner that is adapted to the torsional rigidity of the outlet pipe element (12), such that
- an inherent, inlet-side natural torsional mode of the first coupler (31) and inlet pipe element (11) has a natural frequency f₁ that is less than the excitation frequency f_{exc,} and
- an inherent, outlet-side natural torsional mode of the second coupler (32) and outlet pipe element (12) has a natural frequency f₂ that is essentially equal to the natural frequency f₁.

3. Transducer as claimed in Claim 1 or 2, **characterized in that** the counter-oscillator (20) is essentially parallel to the measuring tube (10).

4. Transducer as claimed in one of the previous claims, **characterized in that** the counter-oscillator (20) has a mass distribution that is at least similar to that of the measuring tube (10).

5. Transducer as claimed in one of the previous claims, **characterized in that** the counter-oscillator (20) is tubular.

6. Transducer as claimed in Claim 5, **characterized in that** the counter-oscillator (20) is essentially coaxial to the measuring tube (10).

7. Transducer as claimed in Claim 5, **characterized in that** the form of the counter-oscillator (20) is essentially identical to that of the measuring tube (10).

8. Transducer as claimed in one of the Claims 4 to 7, **characterized in that** a mass balancer body (21) is installed on the counter-oscillator (20) to set the mass distribution of said counter-oscillator.

9. Transducer as claimed in one of the Claims 4 to 8, **characterized in that** the counter-oscillator (20) is heavier than the measuring tube (10).

10. Transducer as claimed in one of the previous claims, **characterized in that** a first rotating mass balancer body (33) is fixed in a rigid manner on the inlet pipe element (11) to adjust the inlet-side natural torsional mode, and a second rotating mass balancer body (34) is fixed in a rigid manner on the outlet pipe element (12) to adjust the outlet-side natural torsional mode.

11. Transducer as claimed in one of the previous claims, further comprising a first torsion absorber (60) that is essentially coaxial to the inlet pipe element (11) and a second torsion absorber (70) that is essentially coaxial to the outlet pipe element (12).

12. Transducer as claimed in one of the previous claims, further comprising a transducer housing (100) fixed on the inlet pipe element (11) and on the outlet pipe element (12), said housing having a minimum natural frequency that is at least 20% more than the excitation frequency f_{exc}.

13. Coriolis mass flowmeter with a transducer as claimed in one of the Claims 1 to 12.

## Revendications

1. Transducteur du type à vibrations destiné à un fluide s'écoulant dans une conduite, lequel transducteur comprend :
- un tube de mesure (10) courbé, vibrant en fonctionnement, destiné à guider le fluide, lequel tube de mesure (10) communique avec la conduite par l'intermédiaire d'un élément de tube d'entrée (11) débouchant côté entrée et par l'intermédiaire d'un élément de tube de sortie (12) débouchant côté sortie,
- un contre-oscillateur (20) oscillant en fonctionnement en opposition de phase par rapport au tube de mesure (10), lequel contre-oscillateur (20) est relié mécaniquement avec le tube de mesure (10)
-- coté entrée au moyen d'un premier coupleur (31) et
-- côté sortie au moyen d'un deuxième coupleur (32)
- un circuit excitateur (40) destiné à la mise en vibrations du tube de mesure (10) et du contre-oscillateur (20) à une fréquence d'excitation f_{exc},
- un circuit capteur (50) destiné à détecter les oscillations côté entrée et côté sortie du tube de mesure (10),
- transducteur pour lequel une partie intérieure formée par au moins le tube de mesure (10), le contre-oscillateur (20), le circuit excitateur (40) et le circuit capteur (50) provoque, de manière pendulaire autour d'un axe longitudinal (A₁) imaginaire du transducteur, pour l'essentiel en alignement avec les éléments de tube d'entrée et de sortie (11, 12),
-- une rotation du premier et du deuxième coupleur (31, 32) autour de l'axe longitudinal (A₁) et
-- au moins partiellement une déformation élastique, pour l'essentiel en torsion, des éléments de tube d'entrée et de sortie (11, 12),
**caractérisé en ce que** pour obtenir autant que possible une rotation douce lors du mouvement pendulaire, au moins le premier coupleur (31) est dimensionné de manière adaptée à la rigidité en torsion de l'élément de tube d'entrée (11), et au moins le deuxième coupleur (32) est dimensionné de manière adaptée à la rigidité en torsion de l'élément de tube de sortie (12), **en ce que**
- un mode propre de torsion inhérent côté entrée du premier coupleur (31) et de l'élément de tube d'entrée (11) présente une fréquence propre f₁ à peu près égale à la fréquence d'excitation f_{exc}, et
- un mode propre de torsion inhérent côté sortie du deuxième coupleur (32) et de l'élément de tube de sortie (12) présente une fréquence propre f₂ pour l'essentiel égale à la fréquence propre f₁.

2. Transducteur du type à vibrations destiné à un fluide s'écoulant dans une conduite, lequel transducteur comprend :
- un tube de mesure (10) courbé, vibrant en fonctionnement, destiné à guider le fluide, lequel tube de mesure (10) communique avec la conduite par l'intermédiaire d'un élément de tube d'entrée (11) débouchant côté entrée et par l'intermédiaire d'un élément de tube de sortie (12) débouchant côté sortie,
- un contre-oscillateur (20) oscillant en fonctionnement en opposition de phase par rapport au tube de mesure (10), lequel contre-oscillateur (20) est relié mécaniquement avec le tube de mesure (10)
-- côté entrée au moyen d'un premier coupleur (31) et
-- côté sortie au moyen d'un deuxième coupleur (32)
- un circuit excitateur (40) destiné à la mise en vibrations du tube de mesure (10) et du contre-oscillateur (20) à une fréquence d'excitation f_{exc},
- un circuit capteur (50) destiné à détecter les oscillations côté entrée et côté sortie du tube de mesure (10),
- transducteur pour lequel une partie intérieure formée par au moins le tube de mesure (10), le contre-oscillateur (20), le circuit excitateur (40) et le circuit capteur (50) provoque, de manière pendulaire autour d'un axe longitudinal (A₁) imaginaire du transducteur, pour l'essentiel en alignement avec les éléments de tube d'entrée et de sortie (11, 12),
-- une rotation du premier et du deuxième coupleur (31, 32) autour de l'axe longitudinal (A₁) et
-- au moins partiellement une déformation élastique, pour l'essentiel en torsion, des éléments de tube d'entrée et de sortie (11, 12),
**caractérisé en ce que** pour obtenir autant que possible une rotation douce lors du mouvement pendulaire, au moins le premier coupleur (31) est dimensionné de manière adaptée à la rigidité en torsion de l'élément de tube d'entrée (11), et au moins le deuxième coupleur (32) est dimensionné de manière adaptée à la rigidité en torsion de l'élément de tube de sortie (12), **en ce que**
- un mode propre de torsion inhérent côté entrée du premier coupleur (31) et de l'élément de tube d'entrée (11) présente une fréquence propre f₁, qui est inférieure à la fréquence d'excitation f_{exc}, et
- un mode propre de torsion inhérent côté sortie du deuxième coupleur (32) et de l'élément de tube de sortie (12) présente une fréquence propre f₂ pour l'essentiel égale à la fréquence propre f₁.

3. Transducteur selon la revendication 1 ou 2, **caractérisé en ce que** le contre-oscillateur (20) est pour l'essentiel parallèle au tube de mesure (10).

4. Transducteur selon l'une des revendications précédentes, **caractérisé en ce que** le contre-oscillateur (20) présente une répartition de masse au moins analogue à celle du tube de mesure (10).

5. Transducteur selon l'une des revendications précédentes, **caractérisé en ce que** le contre-oscillateur (20) est de forme tubulaire.

6. Transducteur selon la revendication 5, **caractérisé en ce que** le contre-oscillateur (20) est pour l'essentiel coaxial au tube de mesure (10).

7. Transducteur selon la revendication 5, **caractérisé en ce que** le contre-oscillateur (20) est formé pour l'essentiel de façon identique au tube de mesure (10).

8. Transducteur selon l'une des revendications 4 à 7, **caractérisé en ce que**, pour le réglage de la répartition de masse du contre-oscillateur (20), un corps de compensation de masse (21) est installé sur celui-ci.

9. Transducteur selon l'une des revendications 4 à 8, **caractérisé en ce que** le contre-oscillateur (20) est plus lourd que le tube de mesure (10).

10. Transducteur selon l'une des revendications précédentes, **caractérisé en ce que**, pour l'adaptation du mode propre de torsion côté entrée, un premier corps de compensation du couple d'inertie (33) est fixé de façon rigide sur l'élément de tube d'entrée (11) et, pour l'adaptation du mode propre de torsion côté sortie, un deuxième corps de compensation du couple d'inertie (34) est fixé de façon rigide sur l'élément de tube de sortie (12).

11. Transducteur selon l'une des revendications précédentes, comprenant en outre : un premier amortisseur de torsion (60) pour l'essentiel coaxial à l'élément de tube d'entrée (11) et un deuxième amortisseur de torsion (70) pour l'essentiel coaxial à l'élément de tube de sortie (12).

12. Transducteur selon l'une des revendications précédentes, comprenant en outre : un boîtier de transducteur (100) fixé sur l'élément de tube d'entrée (11) et sur l'élément de tube de sortie (12), lequel boîtier présente une fréquence propre minimale, qui est au moins supérieure de 20 % à la fréquence d'excitation f_{exc}.

13. Débitmètre Coriolis avec un transducteur selon l'une des revendications 1 à 12.
